# EUROPEAN PATENT APPLICATION

(11) **EP 4 598 234 A1**
(43) Date of publication of application: **06.08.2025**
(21) Application number: 23872974.3
(22) Date of filing: 22.09.2023
(51) Int. Cl.: H04W 72/27, H04W 16/28, H04L 5/00, H04W 84/04

(54) **METHOD AND APPARATUS FOR PROCESSING SIGNALS IN WIRELESS COMMUNICATION SYSTEM**

(30) Priority: 29.09.2022 KR 20220124661
(71) Applicant: Samsung Electronics Co., Ltd., Suwon-si, Gyeonggi-do 16677 (KR)
(72) Inventor: JUNG, Byounghoon, Suwon-si, Gyeonggi-do 16677 (KR); AGIWAL, Anil, Allen, Texas 75013 (US)
(74) Representative: Nederlandsch Octrooibureau
(86) International application number: PCT/KR2023/014520
(87) International publication number: WO 2024/071857

(57) **Abstract**

The present disclosure relates to a 5th-generation (5G) or 6th-generation (6G) communication system for supporting higher data rates after a 4th-generation (4G) communication system such as a long-term evolution (LTE) system. According to an embodiment of the present disclosure, a network controlled repeater (NCR) may receive, from a base station, via a control link, control information for NCR beam configuration, and perform relaying between the base station and a user equipment (UE) via an NCR forwarding (NCR-Fwd) access link by using an NCR beam configured based on the control information.

## Description

### Technical Field

The present disclosure relates to operations of a user equipment (UE), a repeater, and a base station in a wireless communication system. Specifically, the present disclosure relates to a signal processing method and apparatus for a repeater for supporting transmission and reception by a UE by exchanging beam information with a network, the repeater being capable of multi-antenna transmission and reception operations.

### Background Art

5th-generation (5G) mobile communication technologies define broad frequency bands to enable high transmission rates and new services, and can be implemented in not only Sub-6 gigahertz (GHz) frequency bands such as 3.5 GHz but also in ultra-high ('Above 6 GHz') frequency bands referred to as millimeter wave (mmWave) bands such as 28 GHz and 39 GHz. In addition, for 6th-generation (6G) mobile communication technology referred to as Beyond 5G systems, implementation in terahertz (THz) bands (e.g., a frequency range between 95 GHz and 3 THz) is under consideration to achieve data rates that are fifty times higher than 5G mobile communication technology and ultra-low latency that is one-tenth of the latency thereof.

At the beginning of the development of 5G mobile communication technologies, in order to support services and satisfy performance requirements in connection with enhanced mobile broadband (eMBB), ultra-reliable low-latency communications (URLLC), and massive machine-type communications (mMTC), there has been ongoing standardization regarding beamforming and massive multiple-input multiple-output (MIMO) for mitigating a radio-wave path loss and increasing radio-wave transmission distances in an ultra-high frequency band, support of various numerologies (operating multiple subcarrier spacings, etc.) and dynamic operation of slot formats for efficient utilization of ultra-high frequency resources, initial access technologies for supporting multi-beam transmission and broadbands, definition and operation of a bandwidth part (BWP), new channel coding schemes such as low-density parity-check (LDPC) code for massive data transmission and polar code for highly reliable transmission of control information, layer 2 (L2) pre-processing, network slicing for providing a dedicated network specialized for a specific service, etc.

Currently, there are ongoing discussions regarding improvement and performance enhancement of initial 5G mobile communication technology in consideration of services that the 5G mobile communication technology was intended to support, and physical layer standardization is in progress for technologies such as vehicle-to-everything (V2X) for enabling autonomous vehicles to make driving decisions based on information about their own positions and statuses transmitted by the vehicles and for increasing user convenience, new radio unlicensed (NR-U) aiming at enabling system operations that meet various regulatory requirements in unlicensed bands, NR user equipment (UE) power saving, non-terrestrial network (NTN) that is UE-satellite direct communication for providing coverage in areas where communication with terrestrial networks is unavailable, positioning, etc.

Furthermore, there has been ongoing standardization in the field of radio interface architecture/protocol with respect to technologies such as industrial Internet of things (IIoT) for supporting new services through linkage and convergence with other industries, integrated access and backhaul (IAB) for providing a node for network service area expansion by supporting a wireless backhaul link integrated with an access link, mobility enhancement including conditional handover and dual active protocol stack (DAPS) handover, and 2-step random access (2-step random access channel (RACH) for NR) for simplifying random access procedures, and standardization has also been ongoing in the field of system architecture/service with respect to a 5G baseline architecture (e.g., service based architecture or service based interface) for combining network functions virtualization (NFV) and software-defined networking (SDN) technologies, and mobile edge computing (MEC) for receiving services based on the location of a UE.

When such 5G mobile communication systems are commercialized, connected devices that have been exponentially increasing will be connected to communication networks, and accordingly, it is expected that enhancement of the functions and performance of the 5G mobile communication systems and integrated operations of connected devices will be required. To this end, new research will be conducted on extended reality (XR) for efficiently supporting augmented reality (AR), virtual reality (VR), mixed reality (MR), etc., 5G performance enhancement and complexity reduction by utilizing artificial intelligence (AI) and machine learning (ML), Al service support, metaverse service support, drone communication, etc.

Furthermore, such advancements in 5G mobile communication systems will serve as a basis for developing not only technologies for securing coverage offered by 6G mobile communication technologies in THz bands, such as novel waveforms and multi-antenna transmission technologies such as full dimensional MIMO (FD-MIMO), array antennas, and large-scale antennas, and technologies for improving the coverage of THz band signals, such as metamaterial-based lenses and antennas, high-dimensional spatial multiplexing technology using orbital angular momentum (OAM), and reconfigurable intelligent surface (RIS), but also technologies for increasing frequency efficiency and improving system networks in the 6G mobile communication technologies, which include full-duplex technology, satellites, Al-based communication technologies for realizing system optimization by utilizing Al from the design stage and internalizing end-to-end Al support functions, next-generation distributed computing technologies for realizing services of a complexity level beyond the limits of UE computing capabilities by utilizing ultra-high performance communication and computing resources, etc.

On the other hand, in order to improve the transmission and reception performance of a UE in a wireless communication system, a method of transmitting and receiving information by using MIMO technology employing transmitting and receiving ends of a network and multiple antennas of the UE has been proposed, and for UEs that can utilize this MIMO technology, the need for new radio resource management (RRM) considering MIMO performance of UEs, which is different from that in a conventional cell-based scheme, has emerged.

### Disclosure of Invention

### Technical Problem

Embodiments of the present disclosure provide a method of providing beam information of a network controlled repeater (NCR) to a network in order to improve the performance of a communication network in a wireless communication system, and a signal processing method and apparatus for enabling the network to manage and configure beams of the NCR.

### Solution to Problem

According to an embodiment, an operation method of a network controlled repeater (NCR) for performing relaying between a user equipment (UE) and a base station in a wireless communication system may include receiving, from the base station, via a control link, control information for NCR beam configuration, and performing relaying between the base station and the UE via an NCR forwarding (NCR-Fwd) access link by using an NCR beam configured based on the control information.

The control information for the NCR beam configuration may be information for configuring at least one beam used by the NCR in the NCR-Fwd access link between the NCR and the UE.

The control information for the NCR beam configuration may include information associated with an index indicating at least one NCR beam and information associated with an operation time of the at least one NCR beam.

The control information for the NCR beam configuration may include information for configuring a time resource for aperiodic transmission of the control information for the NCR beam configuration, and may be received via downlink control information (DCI) or radio resource control (RRC) signaling.

The control information for the NCR beam configuration may include information for configuring a periodicity of an NCR beam, and may be received via RRC signaling.

The NCR may include an NCR mobile termination (NCR-MT), and the control link may represent one or more channels between the base station and the NCR-MT.

According to an embodiment, an operation method of a base station in a wireless communication system may include transmitting, to an NCR, via a control link, control information for NCR beam configuration, and performing uplink reception or downlink transmission, based on relaying performed by the NCR using an NCR beam configured according to the control information.

Through embodiments of the present disclosure, a network may efficiently manage connectivity of UEs connected to an NCR by utilizing beam information provided by the NCR to a base station.

### Brief Description of Drawings

FIG. 1 is a diagram illustrating an example of a network controlled repeater (NCR) that relays a signal between a base station (next-generation Node B (gNB) or BS) and a user equipment (UE), according to an embodiment.
FIG. 2 is a diagram illustrating an analog beamforming relationship that can be used for transmitting and receiving signals between a base station (gNB or BS) and an NCR and between the NCR and UEs, according to an embodiment.
FIG. 3 is a diagram illustrating an example of a process in which an NCR provides NCR beam information to a base station, according to an embodiment.
FIG. 4 is a diagram illustrating a process in which a base station determines an NCR beam on which to transmit and receive signals and allocates resources, according to an embodiment.
FIG. 5 is a diagram illustrating a process in which a base station configures an NCR to relay a reference signal via different NCR beams.
FIG. 6 is a diagram illustrating an example of a process in which an NCR provides a Radio Resource Control (RRC) message including NCR beam information to a base station, according to an embodiment.
FIG. 7 is a diagram illustrating an example of a process in which a base station configures, via an NCR, a UE with an NCR beam for downlink data transmission, according to an embodiment.
FIG. 8 is a diagram illustrating an example of a process in which a base station configures, via an NCR, a UE with NCR beams for downlink data transmission, according to an embodiment.
FIG. 9 is a block diagram of a network entity according to an embodiment.
FIG. 10 is a block diagram of a UE according to an embodiment.

### Mode for the Invention

Hereinafter, operation principles of the present disclosure will be described in detail with reference to the accompanying drawings. In the following description of the present disclosure, when it is determined that detailed descriptions of related known functions or configurations may unnecessarily obscure the subject matter of the present disclosure, the descriptions thereof will be omitted. Furthermore, the terms to be described later are defined by taking into account functions described in the present disclosure and may be changed according to a user's or operator's intent or customs. Therefore, definition of the terms should be made based on the overall descriptions in the present specification.

As used in the following description, terms identifying access nodes, terms indicating network entities, terms indicating messages, terms indicating interfaces between network entities, terms indicating various types of identification information, etc. are exemplified for convenience of description. Accordingly, the present disclosure is not limited to terms to be described later, and other terms representing objects having equivalent technical meaning may be used.

Hereinafter, a base station is an entity that allocates resources to a user equipment (UE), and may be at least one of a next-generation Node B (gNode B), an evolved Node B (eNode B), a Node B, a base station (or BS), a radio access unit, a base station controller, or a network node. A UE may include a mobile station (MS), a cellular phone, a smartphone, a computer, or a multimedia system capable of performing a communication function. As used herein, a downlink (or DL) may refer to a radio link through which a base station transmits a signal to a UE, and an uplink (or UL) may refer to a radio link through which a UE transmits a signal to a base station. Furthermore, although an embodiment of the present disclosure may be described below using a long-term evolution (LTE) or LTE-Advanced (LTE-A) system as an example, the embodiment of the present disclosure may be applied to other communication systems having similar technical backgrounds and channel configurations. For example, the other communication systems may include 5th-generation (5G) (or new radio (NR)) mobile communication technology developed after LTE-A, and the 5G described below may be a concept including legacy LTE, LTE-A and other similar services. Furthermore, one skilled in the art will understand that the present disclosure is applicable to other communication systems through some modifications within a range that does not greatly depart from the scope of the present disclosure. It will be understood that each block of a flowchart in the drawings and combinations of blocks of the flowchart may be performed by computer program instructions.

These computer program instructions may be loaded into a processor of a general-purpose computer, a special-purpose computer, or other programmable data processing equipment, and thus, the instructions performed via the processor of the computer or other programmable data processing equipment generate a means for performing functions specified in the flowchart block(s). The computer program instructions may also be stored in a computer-executable or computer-readable memory capable of directing the computer or other programmable data processing equipment to implement functions in a specific manner, and thus, the instructions stored in the computer-executable or computer-readable memory are capable of producing an article of manufacture including instruction means for performing the functions described in the flowchart block(s). The computer program instructions may also be loaded into a computer or other programmable data processing equipment, and thus, instructions for operating the computer or the other programmable data processing equipment by generating a computer-executed process when a series of operations are performed in the computer or the other programmable data processing equipment may provide operations for performing the functions described in the flowchart block(s).

Furthermore, each block may represent a portion of a module, segment, or code that includes one or more executable instructions for executing specified logical function(s). It should also be noted that, in some alternative implementations, functions mentioned in blocks may occur out of order. For example, two blocks illustrated in succession may be executed substantially simultaneously, or the blocks may sometimes be executed in reverse order depending on functions corresponding thereto. As used herein, the term '...unit' denotes a software element or a hardware element such as a field-programmable gate array (FPGA) or an application-specific integrated circuit (ASIC), and performs certain functions. However, the term '...unit' is not limited to software or hardware. The '...unit' may be configured to be in an addressable storage medium or configured to operate one or more processors. Thus, the term '...unit' may include, for example, elements such as software elements, object-oriented software elements, class elements, and task elements, processes, functions, attributes, procedures, subroutines, segments of program code, drivers, firmware, micro-codes, circuits, data, a database, data structures, tables, arrays, and variables. Functions provided by elements and '... units' may be combined into the smaller number of elements and '...units', or may be further divided into additional elements and '...units'. Furthermore, the elements and '... units' may be embodied to reproduce one or more central processing units (CPUs) in a device or security multimedia card. In addition, in an embodiment, the '...unit' may include one or more processors.

Hereinafter, for convenience of descriptions, the present disclosure uses terms and names defined in 5G system (5GS) and NR specifications, which are standards defined by the 3rd Generation Partnership Project (3GPP) organization among the currently existing communication standards. However, the present disclosure is not limited to the terms and names but may also be identically applied to systems that comply with other standards. For example, the present disclosure may be applied to 3GPP 5GS/NR (5G mobile communication standard).

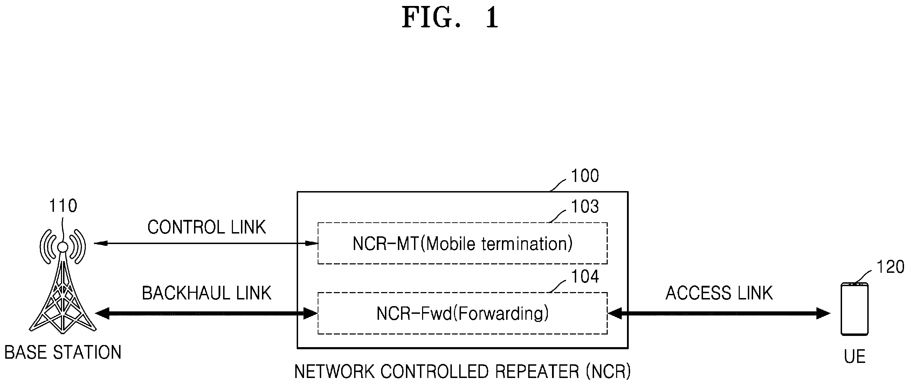

FIG. 1 is a diagram illustrating an example of a network controlled repeater (hereinafter, NCR) 100 that relays a signal between a base station (gNB or BS) 110 and a UE 120, according to an embodiment.

Referring to FIG. 1, the NCR 100 is composed of an NCR mobile termination (NCR-MT) 103 for exchanging control information with the base station 110 via a control link, and an NCR forwarding (NCR-Fwd) 104 for relaying a signal between the base station 110 and the UE 120.

In general, it may be assumed that control and backhaul links through which the NCR 100 and the base station 110 communicate have the same or similar physical channel characteristics.

Generally, it may be assumed that the NCR 100 is time-synchronized with the base station 110 and the UE 120.

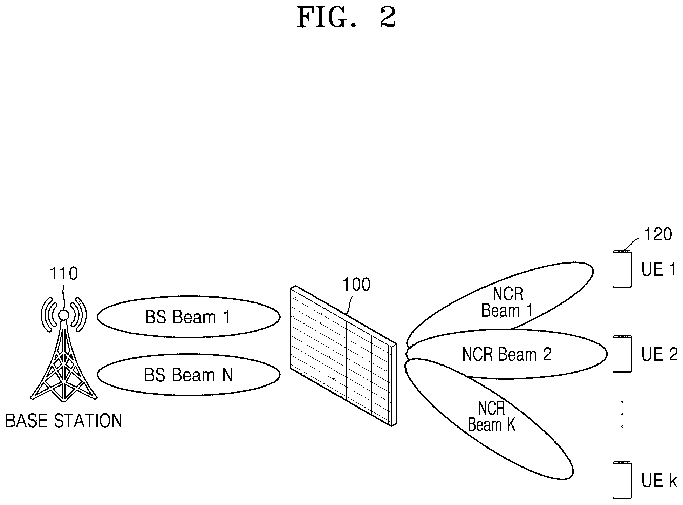

FIG. 2 is a diagram illustrating an analog beamforming relationship that can be used for transmitting and receiving signals between a base station (gNB or BS) 110 and an NCR 100 and between the NCR 100 and UEs 120, according to an embodiment.

The base station 110 may transmit and receive signals to and from the NCR 100 by using a BS beam, and the NCR 100 may transmit and receive signals to and from the base station by using an NCR beam in a base station direction which is capable of transmitting and receiving the corresponding BS beam. To do so, the NCR 100 may receive various reference signals transmitted by the base station 110 in turn via NCR beams in the base station direction, and perform beam selection and beam tracking for identifying a BS beam and an NCR beam in the base station direction.

The NCR 100 may transmit and receive signals to and from each of the UEs 120 by using an NCR beam, and the UE 120 may transmit and receive signals to and from the NCR 100 by using a UE beam that is capable of transmitting and receiving the corresponding NCR beam. To do so, the UE 120 may receive various reference signals transmitted or relayed by the NCR 100 in turn via UE beams and perform beam selection and beam tracking for identifying an NCR beam and a UE beam.

In this case, the NCR 100 may inform the UE 120 of identifiers (IDs) which may distinguish between the NCR beams, or transmit reference signals including the corresponding IDs to the UE 120 so that the UE 120 may identify, select, and track the NCR 100 and an NCR beam.

On the other hand, the NCR 100 may operate transparently to the UE 120, and can only transmit signals from the base station 110 to the UE 120 without providing any NCR ID or NCR beam ID to the UE 120. In this case, the base station 110 and the NCR 100 can only transmit and receive signals generated by the base station 110 and the UE 120 to and from the UE 120, and may only estimate and infer available NCR beams by exchanging these signals.

In this way, in order for the base station 110 and the NCR 100 to identify an NCR beam that can be used for signal transmission and reception with a specific UE 120, the NCR 100 needs to relay reference signals transmitted by the base station 110 by using different NCR beams to allow the UE 120 to measure the reference signals, and then relay measurement values of the UE 120 back to the base station 110, thereby selecting and tracking these NCR beams. To accomplish this, tight beam control signal transmission and reception between the NCR 100 and the base station 110 is required.

To this end, the base station 110 needs to determine when and which beam the NCR 100 uses to transmit and receive signals to and from the base station 110 and the UE 120.

To determine when and which beam the NCR 100 uses to transmit and receive signals and to configure the NCR 100 with resources for using a specific beam, the base station 110 first requires beam information of the NCR 100, such as the number of available beams and ID information of each beam. For this purpose, the NCR 100 needs to provide the beam information to the base station 110.

The beam information provided by the NCR 100 to the base station 110 may be composed of a combination of the following pieces of information.
- Total number of beams that can be supported by NCR
- Number of beams currently supported by NCR
- List of IDs of beams supported by NCR
- List of IDs of beams that can be supported by NCR

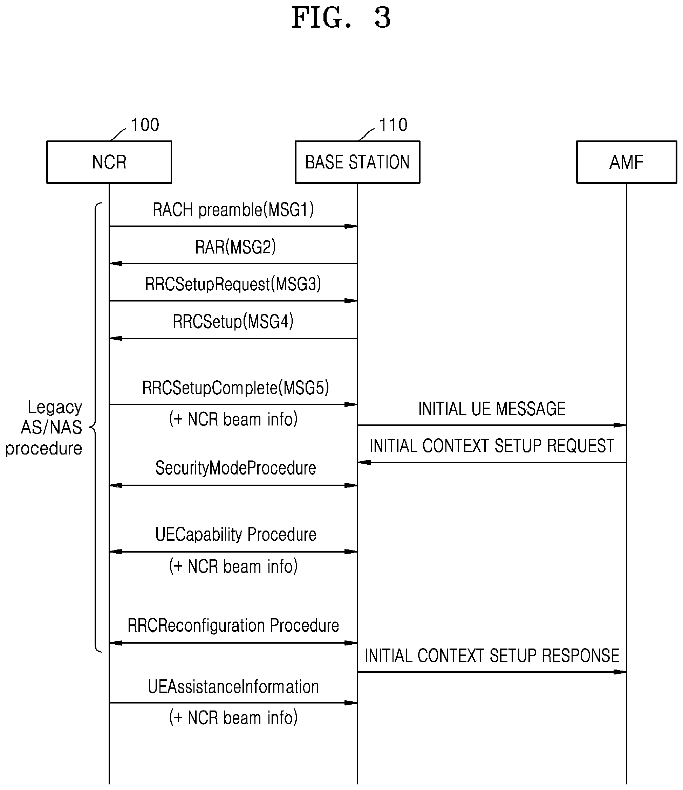

FIG. 3 is a diagram illustrating an example of a process in which an NCR provides NCR beam information to a base station, according to an embodiment.

Referring to FIG. 3, the NCR 100 may include beam information of the NCR 100 in an uplink signal transmitted during an initial access to the base station 110 and subsequent signal transmission/reception operations. For example, the NCR 100 may include NCR beam information in an RRCSetupComplete message that it transmits to the base station 110 after an initial access procedure or a random access procedure. In another example, the NCR 100 may include NCR beam information in a UECapability message that it transmits to the base station 110. In another example, the NCR 100 may include NCR beam information in a UEAssistancelnformation message that it transmits to the base station 110.

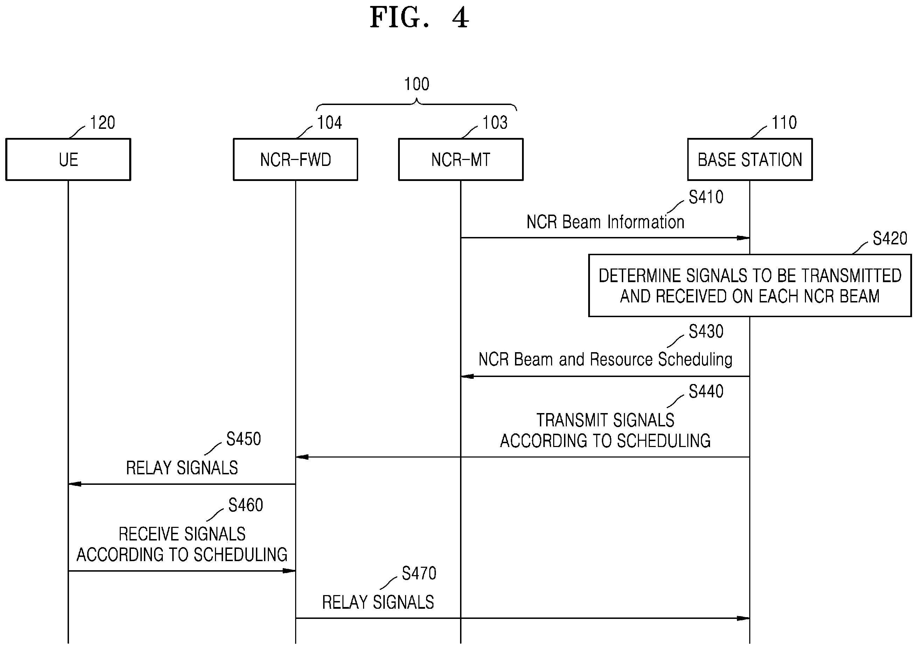

FIG. 4 is a diagram illustrating a process in which the base station 110 determines an NCR beam on which to transmit and receive signals and allocates resources for transmission and reception, according to an embodiment.

Referring to FIG. 4, in operation S410, the base station 110 receives NCR beam information from the NCR 100. In operation S420, the base station 110 determines which signals to transmit and receive and which NCR beam will be used for such transmission and reception by utilizing the beam information received from the NCR 100. Thereafter, in operation S430, the base station 110 determines resources such as time and frequency for transmitting and receiving signals, and then performs beam and resource scheduling to determine an NCR beam to be transmitted and received by the NCR 100 on the corresponding resources. Subsequently, in operation S440, the base station 110 performs downlink transmission or uplink reception according to the scheduled resources. In operations S450 and S470, the NCR 100 performs downlink relay or uplink relay by using a beam allocated according to the scheduled resources.

In an embodiment, the UEs 120 belonging to an area served by the NCR 100 measure reference signals transmitted via NCR beams and report measurements to the base station 110. The base station 110 may distinguish NCR beams through the measurement reports from the UEs 120, determine an interrelationship between these NCR beams and reference signals to identify channel and beam conditions for the UEs 120, and schedule and transmit signals. The type of a signal transmitted in this manner may be a reference signal broadcast to an unspecified number of UEs 120, such as a synchronization signal block (SSB) or a cell reference signal (CRS). The type of a reference signal transmitted in this manner may be a channel state information reference signal (CSI-RS) transmitted in a unicast or groupcast to specific UEs 120.

In an embodiment, the base station 110 may receive the beam information from the NCR 100 and then allocate a BS beam and a corresponding reference signal for communication with the UEs 120 served by a corresponding NCR beam. The reference signal is transmitted from the base station 110 in a beam direction that can reach the NCR 100, and is transmitted in an NCR beam direction corresponding to the reference signal through relay by the NCR 100 to reach the UE 120. There may be one or more beam directions that can reach the NCR 100 from the base station 110. The base station 110 may determine which UE to communicate with and which NCR beam will be used for such communication through beam measurement reports received from the UEs 120 belonging to an area served by the NCR 100.

For example, the base station 110 may assign a unique reference signal, such as SSB or CSI-RS, to be transmitted via each NCR beam. The measurement and reporting of these unique reference signals may represent the quality of each NCR beam, and the base station 110 and the UE 120 may perform transmission and reception of uplink/downlink information through relay by the NCR 100.

All signals transmitted by the base station 110, such as reference signals, are not intended to be received by the NCR 100 but rather by an unspecified number of UEs 120, and therefore, the signals may reach any UE adjacent to the base station, which is not in a service area of the NCR 100, and operate according to legacy NR protocols.

Even when there is only one beam direction (antenna configuration) that can reach the NCR 100 from the base station 110, the base station 110 may assign a unique reference signal to be transmitted via each NCR beam. In this case, the base station 110may transmit reference signals as many as the number of NCR beams via the one beam direction and allow the UE 120 to measure the reference signals. In this case, if there is any UE 120 adjacent to the base station 110 and existing in the beam direction, the UE 120 may measure one or more reference signals via the one beam direction, compare measurement values, and report a result to the base station 110. In this case, the base station 110 may recognize that the reference signals are all transmitted via the one beam direction, and set criteria that are different from those for general beam measurement and tracking, and beam change and failure recovery procedures. For example, the base station 110 may configure reference signal measurement to measure only one of the reference signals that are overlapped and transmitted to the UE 120 and ignore the others. For example, the base station 110 may measure reference signals that are overlapped and transmitted to the UE 120 and then apply an average of the measurements to the overlapped reference signals.

Even when the number of beam directions (antenna configuration) that can reach the NCR 100 from the base station 110 is at least one but less than the number of NCR beams, the base station 110 may assign a unique reference signal to be transmitted via each NCR beam. In this case, the base station 110 may transmit reference signals as many as the number of one or more NCR beams via at least one base station beam direction and allow the UE 120 to measure the reference signals. In this case, if there is any UE 120 adjacent to the base station 110 and existing in a corresponding beam direction, the UE 120 may measure one or more reference signals via the one beam direction, compare measurement values, and report a result to the base station 110. In this case, the base station may recognize that the reference signals are all transmitted in one beam direction, e.g., via the same antenna configuration, and set criteria that are different from those for general beam measurement and tracking, and beam change and failure recovery procedures. For example, the base station may configure reference signal measurement to measure only one of the reference signals that are overlapped and transmitted to the UE and ignore the others. For example, the base station may measure reference signals that are overlapped and transmitted to the UE and then apply an average of the measurements to the overlapped reference signals.

In case that the number of beam directions (antenna configurations) that can reach the NCR 100 from the base station 110 is greater than or equal to the number of NCR beams, the base station 110 may assign a beam direction corresponding to each NCR beam in a one-to-one manner, and then assign a unique reference signal to be transmitted in the corresponding beam direction. In this case, if there is any UE adjacent to the base station and existing in a corresponding beam direction, the UE 120 may measure one or more reference signals via the one beam direction, compare measurement values, and report a result to the base station 110. In this case, the base station may recognize that the reference signals are all transmitted in the one beam direction, e.g., via the same antenna configuration, and set criteria that are different from those for general beam measurement and tracking, and beam change and failure recovery procedures. For example, the base station may configure reference signal measurement to measure only one of the reference signals that are overlapped and transmitted to the UE and ignore the others. For example, the base station may measure reference signals that are overlapped and transmitted to the UE and then apply an average of the measurements to the overlapped reference signals.

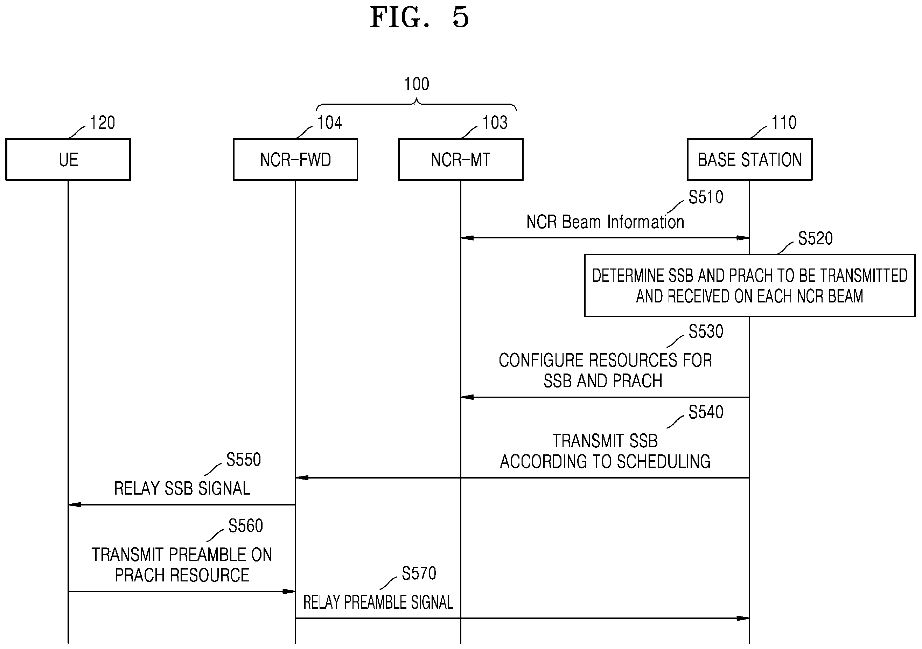

FIG. 5 is a diagram illustrating a process in which the base station 110 configures the NCR 100 to relay a reference signal via different NCR beams.

Referring to FIG. 5, the base station 110 may cause the NCR 100 to relay SSBs via different NCR beams for an initial access procedure or a common random access procedure. To ensure successful transmission and reception of an uplink resource indicated by each SSB, such as a physical random access channel (PRACH) resource, the base station 110 may schedule resources of the base station 110 and resources of the NCR 100 to relay a corresponding uplink transmission via the same NCR beam as that used to relay the SSB including information about the uplink resource. In operation S510, the base station 110 may receive NCR beam information from the NCR 100. In operation S520, the base station 110 may determine, based on the NCR beam information, an SSB and a PRACH to be transmitted and received on each NCR beam, and schedule resources of the base station 110 and the NCR 100. In operation S530, the base station 110 may transmit information about the scheduling to the NCR-MT 103. In operation S540, the base station 110 may transmit the SSB to the NCR-Fwd 103 based on the information about the scheduling. In operation S550, the NCR 100 may relay transmission of the SSB based on the received information about the scheduling. In operation S560, the UE 120 may receive the reference signal, such as the SSB (or CSI-RS), relayed by the NCR 100, and perform an initial access procedure (or a random access procedure) for connecting to the base station 110 via an uplink resource indicated by the SSB. In operation S570, the NCR 100 may relay a corresponding uplink transmission via the same NCR beam as that used to relay the SSB.

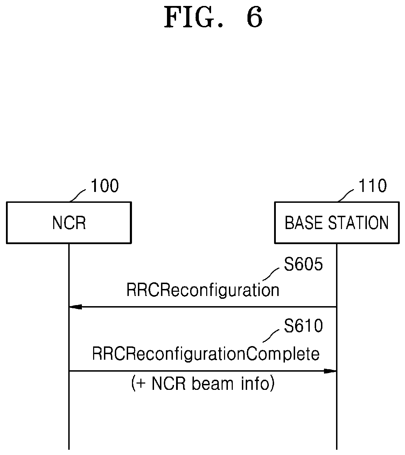

FIG. 6 is a diagram illustrating an example of a process in which the NCR 100 provides a Radio Resource Control (RRC) message including NCR beam information to the base station 110, according to an embodiment.

Referring to FIG. 6, in operation S605, the NRC 100 may receive an RRCReconfiguration message from the base station 110. In operation S610, the NCR 100 may provide an RRC message, such as an RRCReconfigurationComplete message, including beam information, to the base station 110. Additionally, the NCR 100 may provide the beam information to the base station 110 in an RRC connection resume request message, a beam failure recovery (BFR) message, etc.

The base station 110 may transmit, to the NCR 100, a message requesting the provision of beam information, such as an RRCConfiguration message. The NCR 100 may provide a response message thereto, such as an RRCReconfigurationComplete message, including the beam information.

In addition, the NCR 100 may provide the beam information to the base station 110 by defining a Media Access Control (MAC) message such as a MAC Control Element (MAC-CE) including the beam information.

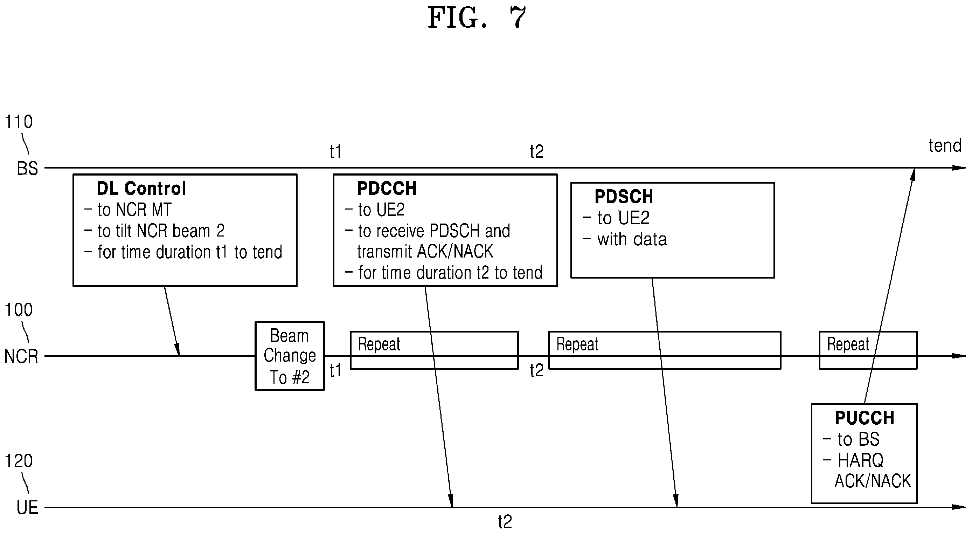

FIG. 7 is a diagram illustrating an example of a process in which the base station 110 configures, via the NCR 100, the UE 120 with an NCR beam for downlink data transmission, according to an embodiment.

Referring to FIG. 7, the base station 110 may transmit a control signal to the NCR 100 to configure the UE 120 with a determined/configured NCR beam for a time duration required for downlink data transmission. This control signal may be transmitted instantaneously to the NCR 100 by the base station 110 when necessary, or may be configured with beam configurations for one or more resources by listing information of NCR beams to be configured for a time duration. Additionally, the control signal may be configured to include a periodicity and a beam to periodically use a specific beam at a specific time.

The beam configuration downlink signal that the base station 110 transmits to the NCR 100 may be transmitted from the base station 110 to the NCR-MT 103 by using a control channel.

The beam configuration downlink signal transmitted by the base station 110 to the NCR 100 may be Downlink Control Information (DCI) at a Physical (PHY) layer, a MAC-CE at a MAC layer, or a message at an RRC layer, which includes an indicator indicating control of an NCR beam, NCR beam information, and other information such as information about a time when the corresponding beam is to be used.

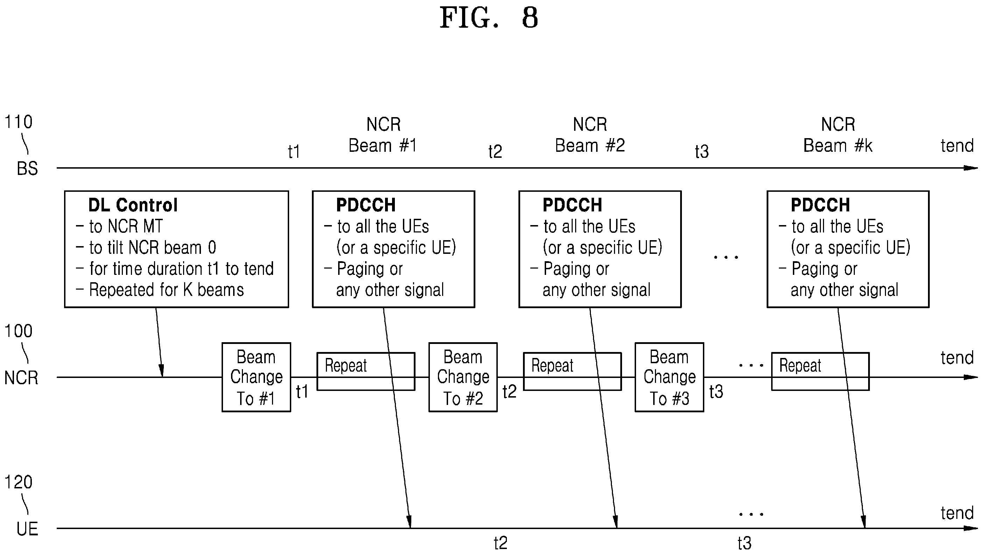

FIG. 8 is a diagram illustrating an example of a process in which the base station 110 configures, via the NCR 100, the UE 120 with NCR beams for downlink data transmission, according to an embodiment.

Referring to FIG. 8, the base station 110 may transmit a pre-arranged control signal to the NCR 100 to configure regular NCR beam changes necessary for downlink data transmission. For example, the base station 100 may configure the NCR 100 with certain pre-arranged configuration information, e.g., beam 0, so that the NCR 100 may thereafter change NCR beams at regular intervals.

For this purpose, the base station 110 may configure the NCR 100 with start and end times for regular beam changes and the length of time required to operate with each beam. Alternatively, the NCR 100 may be configured with this information in advance through an RRC message, etc.

This control signal may be transmitted instantaneously to the NCR 100 by the base station 110 when necessary, or may be configured by listing information of NCR beams to be configured for a time duration. Additionally, the control signal may be configured to include a periodicity and a beam to periodically use a specific beam at a specific time.

The beam configuration downlink signal that the base station 110 transmits to the NCR 100 may be transmitted from the base station 100 to the NCR-MT 103 by using a control channel.

The beam configuration downlink signal transmitted by the base station 110 to the NCR 100 may be a DCI at the PHY layer, a MAC-CE at the MAC layer, or a message at the RRC layer, which includes an indicator indicating control of an NCR beam, NCR beam information, and other information such as information about a time when the corresponding beam is to be used.

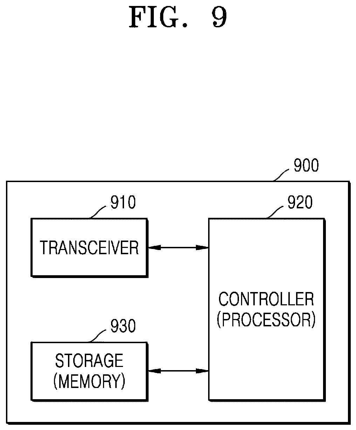

FIG. 9 is a block diagram of a network entity 900 according to an embodiment. The network entity 900 may be the base station 110 or the NCR 100.

Referring to FIG. 9, the network entity may include a transceiver 910, a controller 920, and a storage 930. In accordance with a communication method of the network entity described above, the transceiver 910, the controller (or the processor) 920, and the storage (or memory) 930 may operate. However, the components of the network entity 900 are not limited to the above example. For example, the network entity 900 may include more or fewer components than the components described above. For example, the network entity 900 may include the transceiver 910 and the controller 920. Furthermore, the transceiver 910, the controller 920, and the storage 930 may be implemented in the form of a single chip.

The transceiver 910 collectively refers to a transmitter of the network entity and a receiver of the network entity, and may transmit and receive signals to and from UEs, other base stations, or other network devices. In this case, the transmitted and received signals may include control information and data. For example, the transceiver 910 may transmit, to a UE, system information as well as a synchronization signal or a reference signal. For this purpose, the transceiver 910 may be composed of an RF transmitter for up-converting and amplifying a frequency of a signal being transmitted and an RF receiver for low-noise amplifying a received signal and down-converting its frequency. However, this is merely an embodiment of the transceiver 910, and the components of the transceiver 910 are not limited to the RF transmitter and the RF receiver. The transceiver 910 may include a wired or wireless transceiver, and may include various components for transmitting and receiving signals. Furthermore, the transceiver 910 may receive a signal via a communication channel (e.g., a radio channel) and output the signal to the controller 920, and transmit a signal output from the controller 920 via a communication channel. In addition, the transceiver 910 may receive a communication signal and output it to the processor, and transmit a signal output from the processor to the UE, another base station, or another entity over a wired or wireless network.

The storage 930 may store programs and data necessary for operations of the network entity 900. Also, the storage 930 may store control information or data included in signals obtained by the network entity 900. The storage 930 may be composed of storage media, such as read-only memory (ROM), random access memory (RAM), hard discs, compact disc (CD)-ROM, and digital versatile discs (DVDs), or a combination thereof. The storage 930 may also store at least one of information transmitted and received via the transceiver 910 and information generated via the controller 920.

In the present disclosure, the controller 920 may be defined as a circuit or an application-specific integrated circuit, or at least one processor. For example, the processor may include a communication processor (CP) for performing control for communication and an application processor (AP) for controlling upper layers such as application programs. The controller 920 may control all operations of the network entity 900 according to an embodiment proposed in the present disclosure. For example, the controller 920 may control a flow of signals between blocks to perform operations according to the above-described flowcharts.

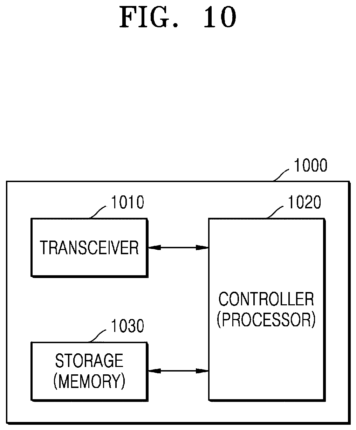

FIG. 10 is a block diagram of a UE 1000 according to an embodiment.

Referring to FIG. 10, the UE may include a transceiver 1010, a controller 1020, and a storage 1030. In accordance with a communication method of the UE described above, the transceiver 1010, the controller 1020, and the storage 1030 may operate. However, the components of the UE 1000 are not limited to the above example. For example, the UE 1000 may include more or fewer components than the components described above. For example, the UE 1000 may include the transceiver 1010 and the controller 1020. Furthermore, the transceiver 1010, the controller 1020, and the storage 1030 may be implemented in the form of a single chip.

The transceiver 1010 collectively refers to a transmitter of the UE 1000 and a receiver of the UE, and may transmit and receive signals to and from a base station, another UE, or a network entity. Signals transmitted to and received from the base station may include control information and data. For example, the transceiver 1010 may receive, from the base station, system information as well as a synchronization signal or a reference signal. For this purpose, the transceiver 1010 may be composed of an RF transmitter for up-converting and amplifying a frequency of a signal being transmitted and an RF receiver for low-noise amplifying a received signal and down-converting its frequency. However, this is merely an embodiment of the transceiver 1010, and the components of the transceiver 1010 are not limited to the RF transmitter and the RF receiver. Furthermore, the transceiver 1010 may include a wired or wireless transceiver, and may include various components for transmitting and receiving signals. Furthermore, the transceiver 1010 may receive a signal via a radio channel and output the signal to the controller 1020, and transmit a signal output from the controller 1020 via a radio channel. In addition, the transceiver 1010 may receive a communication signal and output it to the processor, and transmit a signal output from the processor to a network entity over a wired or wireless network.

The storage 1030 may store programs and data necessary for operations of the UE. Also, the memory 1030 may store control information or data included in signals obtained by the UE. The storage 1030 may be composed of storage media, such as ROM, RAM, hard discs, CD-ROM, and DVDs, or a combination thereof.

In the present disclosure, the controller 1020 may be defined as a circuit or an application-specific integrated circuit, or at least one processor. For example, the processor may include a CP for performing control for communication and an AP for controlling upper layers such as application programs. The controller 1020 may control all operations of the UE according to an embodiment proposed in the present disclosure. For example, the controller 1020 may control a flow of signals between blocks to perform operations according to the above-described flowcharts.

A specific example for explaining an embodiment according to the present disclosure is only one combination of each criterion, method, detailed method, and operation, and a base station, an NCR, or a UE is capable of processing signals between each other via a combination of at least two or more of the various techniques described. Furthermore, in this case, the signal processing in a wireless communication system including the NCR may be performed according to a method determined via one or at least a combination of two or more of the techniques described above. For example, it may be possible to perform some of the operations of one embodiment in combination with some of the operations of another embodiment.

The methods according to the embodiments described in the appended claims or specification of the present disclosure may be implemented in hardware, software, or a combination of hardware and software.

When the methods are implemented in software, a computer-readable storage medium having one or more programs (software modules) stored therein may be provided. The one or more programs stored in the computer-readable storage medium is configured for execution by one or more processors within an electronic device. The one or more programs include instructions that cause the electronic device to execute the methods according to the embodiments described in the claims or specification of the present disclosure.

The programs (software modules or software) may be stored in RAM, non-volatile memory including a flash memory, ROM, electrically erasable programmable ROM (EEPROM), magnetic disc storage devices, CD-ROM, DVDs or other types of optical storage devices, and magnetic cassettes. Alternatively, the programs may be stored in a memory that is configured as a combination of some or all of the stated devices. A plurality of such devices may be included in the memory.

Furthermore, the programs may be stored in an attachable storage device that may be accessed via a communication network, such as the Internet, Intranet, a local area network (LAN), a wide RAN (WLAN), or a storage area network (SAN), or a communication network composed of a combination thereof. The storage device may connect to a device for performing the methods according to the embodiments of the present disclosure via an external port. Furthermore, a separate storage device on a communication network may also connect to the device for performing the methods according to the embodiments of the present disclosure.

In the specific embodiments of the present disclosure, a component included in the present disclosure is expressed in a singular or plural form depending on the presented specific embodiments. However, singular or plural expressions are selected to be suitable for situations presented for convenience of description, and the present disclosure is not limited to elements in a singular or plural form, i.e., an element expressed in a plural form may be configured as a single element, or an element expressed in a singular form may be configured as a plurality of elements.

Moreover, although specific embodiments have been described in the detailed description of the present disclosure, various modifications may be made therein without departing from the scope of the present disclosure. Thus, the scope of the present disclosure should not be limited to the described embodiments, but should be defined by the following claims as well as their equivalents.

## Claims

1. An operation method of a network controlled repeater (NCR) for performing relaying between a user equipment (UE) and a base station, the operation method comprising:
receiving, from the base station, via a control link, control information for NCR beam configuration; and
performing relaying between the base station and the UE via an NCR forwarding (NCR-Fwd) access link by using an NCR beam configured based on the control information.

2. The operation method of claim 1, wherein the control information for the NCR beam configuration is information for configuring at least one beam used by the NCR in the NCR-Fwd access link between the NCR and the UE.

3. The operation method of claim 1, wherein the control information for the NCR beam configuration comprises information associated with an index indicating at least one NCR beam and information associated with an operation time of the at least one NCR beam.

4. The operation method of claim 1, wherein the control information for the NCR beam configuration comprises information for configuring a time resource for aperiodic transmission of the control information for the NCR beam configuration, and is received via downlink control information (DCI) or radio resource control (RRC) signaling.

5. The operation method of claim 1, wherein the control information for the NCR beam configuration comprises information for configuring a periodicity of an NCR beam, and is received via RRC signaling.

6. The operation method of claim 1, wherein
the NCR comprises an NCR mobile termination (NCR-MT), and
the control link represents one or more channels between the base station and the NCR-MT.

7. A network controlled repeater (NCR) for performing relaying between a user equipment (UE) and a base station, the NCR comprising:
a transceiver; and
at least one processor connected to the transceiver, wherein the at least one processor is configured to
receive, from the base station, via a control link, control information for NCR beam configuration, and
perform relaying between the base station and the UE via an NCR forwarding (NCR-Fwd) access link by using an NCR beam configured based on the control information.

8. The NCR of claim 7, wherein the control information for the NCR beam configuration is information for configuring at least one beam used by the NCR in the NCR-Fwd access link between the NCR and the UE.

9. The NCR of claim 7, wherein the control information for the NCR beam configuration comprises information associated with an index indicating at least one NCR beam and information associated with an operation time of the at least one NCR beam.

10. The NCR of claim 7, wherein the control information for the NCR beam configuration comprises information for configuring a time resource for aperiodic transmission of the control information for the NCR beam configuration, and is received via downlink control information (DCI) or radio resource control (RRC) signaling.

11. The NCR of claim 7, wherein the control information for the NCR beam configuration comprises information for configuring a periodicity of an NCR beam, and is received via RRC signaling.

12. The NCR of claim 7, wherein
the NCR comprises an NCR mobile termination (NCR-MT), and
the control link represents one or more channels between the base station and the NCR-MT.

13. An operation method of a base station in a wireless communication system, the operation method comprising:
transmitting, to a network controlled repeater (NCR), via a control link, control information for NCR beam configuration; and
performing uplink reception or downlink transmission, based on relaying performed by the NCR using an NCR beam configured according to the control information.

14. A base station in a wireless communication system, the base station comprising:
a transceiver; and
at least one processor connected to the transceiver, wherein the at least one processor is configured to
transmit, to a network controlled repeater (NCR), via a control link, control information for NCR beam configuration, and
perform uplink reception or downlink transmission, based on relaying performed by the NCR using an NCR beam configured according to the control information.
